# EUROPEAN PATENT APPLICATION

(11) **EP 3 104 040 A1**
(43) Date of publication of application: **14.12.2016**
(21) Application number: 15746324.1
(22) Date of filing: 02.02.2015
(51) Int. Cl.: F16H 21/16, F16D 23/12, F16H 1/08

(54) **MOTION CONVERSION DEVICE AND CLUTCH ACTUATOR**

(30) Priority: 05.02.2014 JP 2014020627
(71) Applicant: Aisin Seiki Kabushiki Kaisha, Kariya-shi, Aichi 448-8650 (JP)
(72) Inventor: SHIOZAKI, Taro, Kariya-shi, Aichi 448-8650 (JP); YAMASAKI, Shoichi, Kariya-shi, Aichi 448-8650 (JP); YAMADA, Hiroyuki, Kariya-shi, Aichi 448-8650 (JP)
(74) Representative: Kramer Barske Schmidtchen Patentanwälte PartG mbB
(86) International application number: PCT/JP2015/052836
(87) International publication number: WO 2015/119077

(57) **Abstract**

A motion conversion device includes a conversion mechanism that converts a rotational motion of an electric motor into a linear motion of a movable member. The conversion mechanism includes a rotating member to be rotated about a spindle; and a rod. The rod includes a first connector connected to the rotating member via a first connection shaft; and a second connector connected to the movable member via a second connection shaft. When energization of the electric motor is stopped, the rod is located at a restrictive position to restrict the linear motion of the movable member. The restrictive position includes a position of the rod defined by alignment of the shaft centers of the spindle, the first connection shaft, and the second connection shaft on the same straight line as viewed along the axial direction of the spindle.

## Description

### TECHNICAL FIELD

Embodiments of the present invention relate to a motion conversion device and a clutch actuator.

### BACKGROUND ART

A clutch actuator configured to operate a release member of a clutch has hitherto been known (for example, Patent Document 1). This type of clutch actuator receives a reverse driving force from the release member (movable member) pressed by a diaphragm spring of the clutch in a completely engaged state (clutch on). Known structures for holding the position of the release member against the reverse driving force from the release member include one to energize an electric motor to generate power that counterbalances with the reverse driving force.

### CITATION LIST

### Patent Literature

Patent Document 1: Japanese Patent Application Laid-open No. 2003-194101

### DISCLOSURE OF INVENTION

### PROBLEM TO BE SOLVED BY THE INVENTION

The structure for holding the position of the release member by energizing the electric motor, however, has a problem with increased power consumption. It is desired to provide a novel clutch actuator with a structure capable of holding the position of the release member without electric power.

### MEANS FOR SOLVING PROBLEM

A motion conversion device of an embodiment comprises an electric motor; and a conversion mechanism that converts a rotational motion of the electric motor into a linear motion of a movable member, the conversion mechanism comprises a rotating member to be rotated about a spindle by drive power of the electric motor; a first connection shaft provided to the rotating member at a position different from a position of the spindle, an axial direction of the first connection shaft being parallel to an axial direction of the spindle; a second connection shaft, an axial direction of the second connection shaft being parallel to the axial direction of the spindle; and a rod, the rod comprises a first connector connected to the rotating member via the first connection shaft and rotatable about the first connection shaft; and a second connector connected to the movable member via the second connection shaft and rotatable about the second connection shaft, wherein when energization of the electric motor is stopped, the rod is located at a restrictive position to restrict the linear motion of the movable member, and the restrictive position includes a position of the rod defined by alignment of a shaft center of the spindle, a shaft center of the first connection shaft, and a shaft center of the second connection shaft on the same straight line as viewed along the axial direction of the spindle. Thus, the motion conversion device with a novel structure can be attained, which can hold the position of the movable member without electric power.

The motion conversion device further comprises a stopper that abuts against the rotating member to restrict the rotating member from moving in a direction opposite to a direction toward a position of the rotating member, the position defined by the alignment of
the shaft centers of the spindle, the first connection shaft, and the second connection shaft on the same straight line as viewed along the axial direction of the spindle, wherein the restrictive position includes a position of the rod while the rotating member abuts on the stopper. Thus, the motion conversion device enables the position of the movable member to be held by the abutment of the stopper and the rotating member without electric power.

In the motion conversion device, the conversion mechanism comprises a gear connected to the electric motor, and the rotating member comprises a face gear to which the drive power of the electric motor is transmitted via the gear. Thus, the motion conversion device can transmit the power of the electric motor further efficiently than drive power transmission of the electric motor via a worm gear and a worm wheel. According to the motion conversion device, the electric motor can be downsized and the gear ratio of the conversion mechanism can be reduced.

In the motion conversion device, the conversion mechanism comprises a gear connected to the electric motor, and the rotating member comprises a helical gear to which the drive power of the electric motor is transmitted via the gear. Thus, the motion conversion device can transmit the power of the electric motor further efficiently than the drive power transmission of the electric motor via a worm gear and a worm wheel. According to the motion conversion device, the electric motor can be downsized and the gear ratio of the conversion mechanism can be reduced.

A clutch actuator of an embodiment comprises an electric motor; and a conversion mechanism that converts a rotational motion of the electric motor into a linear motion of a release member, the conversion mechanism comprises a rotating member to be rotated about a spindle by drive power of the electric motor; a first connection shaft provided to the rotating member at a position different from a position of the spindle, an axial direction of the first connection shaft being parallel to an axial direction of the spindle; a second connection shaft, an axial direction of the second connection shaft being parallel to the axial direction of the spindle; and
a rod, the rod comprises a first connector connected to the rotating member via the first connection shaft and rotatable about the first connection shaft; and a second connector connected to the release member via the second connection shaft and rotatable about the second connection shaft, wherein when energization of the electric motor is stopped, the rod is located at a restrictive position to restrict the linear motion of the release member, and the restrictive position includes a position of the rod defined by alignment of a shaft center of the spindle, a shaft center of the first connection shaft, and a shaft center of the second connection shaft on the same straight line as viewed along the axial direction of the spindle. Thus, the clutch actuator can hold the release member in position without electric power.

In the clutch actuator, the position of the rod defined by the alignment of the shaft centers of the spindle, the first connection shaft, and the second connection shaft on the same straight line as viewed along the axial direction of the spindle includes a dead center position at which the shaft center of the spindle comes between the shaft center of the first connection shaft and the shaft center of the second connection shaft.

In the clutch actuator, the rotating member is rotated between a first position and a second position distant from the stopper portion, the first position at which the rotating member abuts on a stopper and is restricted from rotating by the stopper, and when the energization of the electric motor is stopped, the rotating member is located at the first position to maintain power transmission by a clutch including the release member.

In the clutch actuator, the clutch interrupts the power transmission when by the energization of the electric motor, the rotating member moves to the second position to move the rod.

In the clutch actuator, when receiving a load from the clutch while the rotating member is located at the first position, the rod rotates the rotating member and stops at the position defined by the alignment of the shaft centers of the spindle, the first connection shaft, and the second connection shaft on the same straight line as viewed along the axial direction of the spindle.

In the clutch actuator, the clutch transmits power while the rod is located in a range from the position defined by the alignment of the shaft centers of the spindle, the first connection shaft, and the second connection shaft on the same straight line as viewed along the axial direction of the spindle to the position defined by the first position of the rotating member.

### BRIEF DESCRIPTION OF DRAWINGS

FIG. 1 is a cross-sectional view of a clutch device according to a first embodiment;
FIG. 2 is a cross-sectional view of a clutch actuator according to the first embodiment;
FIG. 3 is a cross-sectional view of the clutch actuator according to the first embodiment along the line III-III in FIG. 2;
FIG. 4 is a cross-sectional view of the clutch actuator according to the first embodiment in a state that a face gear is located at an abutment position;
FIG. 5 is a cross-sectional view of a clutch actuator according to a second embodiment; and
FIG. 6 is a cross-sectional view of the clutch actuator according to the second embodiment in a state that a helical gear is located at an abutment position.

### BEST MODES FOR CARRYING OUT THE INVENTION

Exemplary embodiments are specifically described below with reference to the accompanying drawings. Note that the following embodiments and modifications contain the same or like components. In the following, the same or like components are thus denoted by common reference symbols and detailed descriptions thereof are omitted.

### First Embodiment

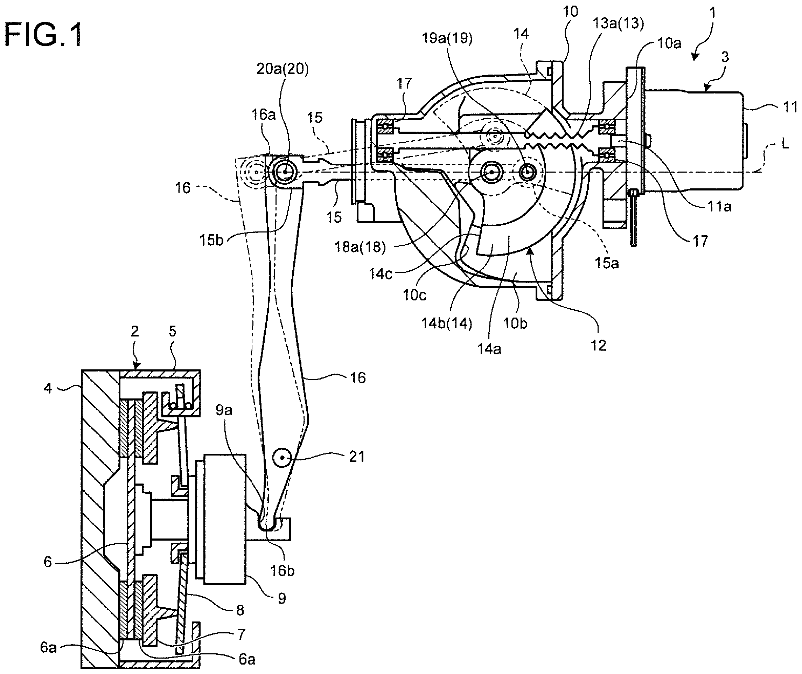

In the present embodiment, as illustrated in FIG. 1, a clutch device 1 includes a clutch 2 (clutch unit, clutch mechanism) and a clutch actuator 3 (motion conversion device) configured to drive the clutch 2. The clutch device 1 is provided in a vehicle as an example. The clutch device 1 may be provided in a vessel or a power generator.

The clutch 2 is provided between an engine (not illustrated) and a transmission. In the present embodiment, the clutch 2 is a dry, single diaphragm spring friction clutch. Specifically, the clutch 2 includes a flywheel 4, a clutch cover 5, a clutch disc 6, a pressure plate 7, a diaphragm spring 8, and a release bearing 9. The clutch 2 may be of other types.

The flywheel 4 is fixed to a crankshaft (output shaft, not illustrated) of the engine and rotates integrally with the crankshaft.

The clutch cover 5 is fixed to the outer circumference of the flywheel 4, covering the surface of the flywheel 4 opposite to the engine. The clutch cover 5 rotates integrally with the flywheel 4 and the crankshaft.

The clutch disc 6 is a friction plate that includes friction members 6a on both surfaces thereof. The clutch disc 6 transmits engine power to the transmission. The clutch disc 6 is positioned between the flywheel 4 and the pressure plate 7. The clutch disc 6 is connected at the center to an input shaft of the transmission. The clutch disc 6 is not relatively rotatable with the input shaft of the transmission. The clutch disc 6 is axially movable relative to the input shaft of the transmission.

The pressure plate 7 presses the clutch disc 6 toward the flywheel 4. Thereby, the pressure plate 7 places the clutch disc 6 between the flywheel 4 and the pressure plate 7. This makes the clutch disc 6 frictionally engage with the flywheel 4. By this frictional engagement, the clutch disc 6 can rotate integrally with the flywheel 4. The pressure plate 7 is connected to the clutch cover 5 with a strap (not illustrated), and rotates along with the rotation of the clutch cover 5. The strap includes a plurality of laminated leaf springs. One end of the strap is fixed to the clutch cover 5. The other end of the strap is fixed to the pressure plate 7. The strap urges the pressure plate 7 in the direction to move away the pressure plate 7 from the flywheel 4.

The diaphragm spring 8 includes a plurality of elastic plate members radially arranged. An outer end of the diaphragm spring 8 is swingably supported by a support (not illustrated) of the clutch cover 5. A middle part of the diaphragm spring 8 can press the pressure plate 7 toward the flywheel 4. An inner end of the diaphragm spring 8 presses the release bearing 9 oppositely relative to the flywheel 4. When pressed at the inner end to the flywheel 4 by the release bearing 9, the middle part of the diaphragm spring 8 presses the pressure plate 7 toward the flywheel 4. When released from the pressure from the release bearing 9 to the inner end, the middle part of the diaphragm spring 8 is released from pressing the pressure plate 7. The clutch device 1 operates as above so as to be able to frictionally engage the clutch disc 6 and the flywheel 4 with each other and release them from the frictional engagement.

The release bearing 9 (movable member, release member) is formed of a ball bearing. The release bearing 9 is provided so as to be linearly movable (reciprocable) along the axial direction. Specifically, an inner race of the release bearing 9 is supported to be linearly movable along the axial direction by a sleeve which is supported by a case of the transmission while surrounding the outer circumference of the input shaft of the transmission. An outer race of the release bearing 9, on the other hand, abuts on an inner circumference of the diaphragm spring 8 and rotates integrally with the diaphragm spring 8. The thus-structured release bearing 9 presses the inner circumference of the diaphragm spring 8 toward the flywheel 4 to engage the clutch 2.

In the present embodiment, as illustrated in FIG. 1, the clutch actuator 3 includes a casing 10, an electric motor 11, and a conversion mechanism 12 (crank mechanism) configured to convert a rotational motion of the electric motor 11 into a linear motion of the release bearing 9 (movable member).

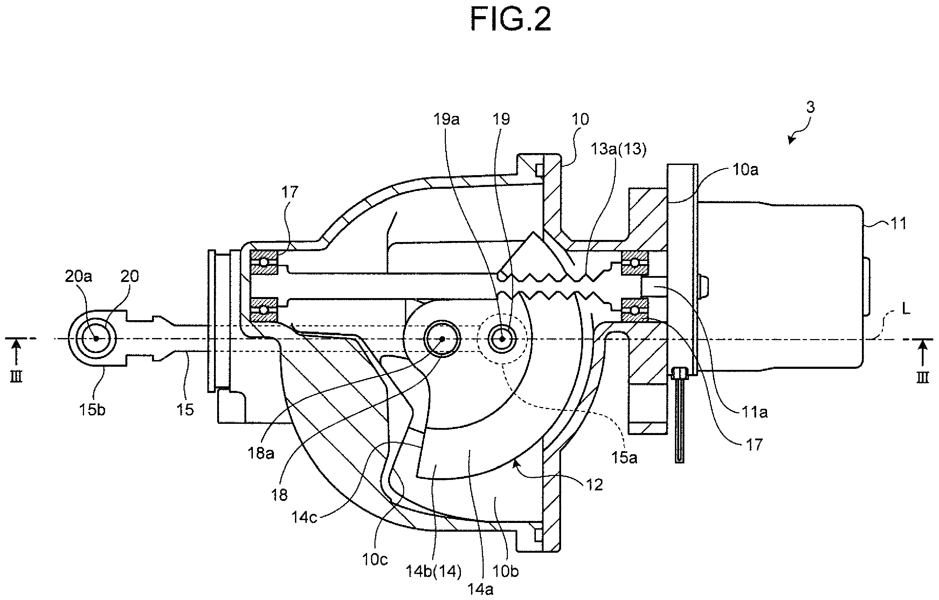

In the present embodiment, as illustrated in FIG. 2, the casing 10 includes a motor mount 10a on which the electric motor 11 is mounted. The casing 10 contains a housing 10b that houses therein at least part of the conversion mechanism 12. The housing 10b is provided with a stopper 10c. The casing 10 is formed of an assembly of components (divided members). The casing 10 is fixed to a vehicle body.

The electric motor 11 is a DC motor. An output shaft 11a (output shaft) of the electric motor 11 rotates (rotational motion) forward and reversely in accordance with power supplied from a control device. A distal end of the output shaft 11a is located in the housing 10b in the casing 10.

As illustrated in FIGS. 1 and 2, the conversion mechanism 12 includes an input gear 13 (gear), a face gear 14 (gear, rotating member), a rod 15, and a release fork 16.

The input gear 13 is a rod-like (shaft-like) helical gear including a tooth 13a that is twisted like a screw. The input gear 13 is placed coaxially with the output shaft 11a of the electric motor 11 in the housing 10b in the casing 10. In the present embodiment, the input gear 13 is made of a rod-like member having the tooth 13a partially. Both ends of the input gear 13 are rotatably supported by bearings 17 and the input gear 13 is connected at one end to the output shaft 11a to rotate integrally with the output shaft 11a. In other words, the input gear 13 is rotated by the electric motor 11.

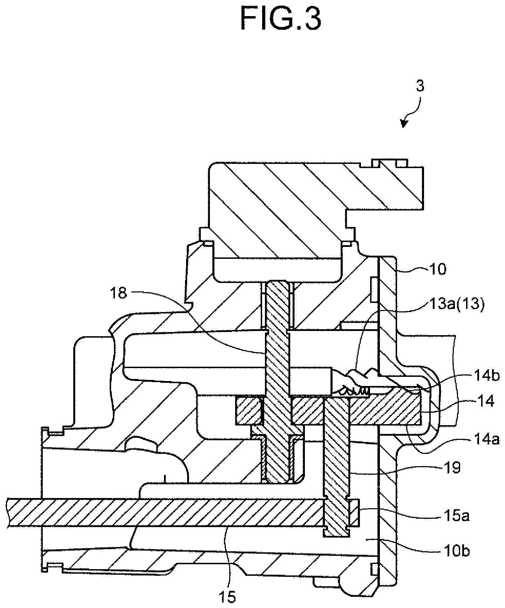

As illustrated in FIGS. 2 and 3, the profile of the face gear 14 is a substantially fan plate. FIG. 3 is a cross-sectional view along the line III-III in FIG. 2. The face gear 14 is supported by a spindle 18 so as to be rotatable about the spindle 18. The axial direction (axial direction) of the spindle 18 is orthogonal to the axial direction of the output shaft 11a of the electric motor 11. The face gear 14 includes a fan-like part 14a provided about the spindle 18 and having a tooth 14b on one face. The face gear 14 is engaged with the input gear 13. The face gear 14 is rotated about the spindle 18 by the drive power of the electric motor 11 transmitted via the input gear 13. In the present embodiment, an end 14c (abutment) of the fan-like part 14a can come into and out of contact with the stopper 10c of the casing 10 in the rotational direction of the spindle 18. The face gear 14 together with the input gear 13 constitutes a speed reducer.

As illustrated in FIGS. 2 and 3, one longitudinal end of the rod 15 is located inside the housing 10b in the casing 10, and the other longitudinal end is placed outside the housing 10b. The rod 15 is placed opposite the input gear 13 relative to the face gear 14. The rod 15 includes connectors 15a and 15b at both ends thereof. A connection shaft 19 (first connection shaft, shaft) inserts through the connector 15a (first connector). The connector 15a is connected to the face gear 14 via the connection shaft 19. The connector 15a is rotatable about the connection shaft 19. The connection shaft 19 is connected to the face gear 14 at a position different from the position of the spindle 18. Specifically, the connection shaft 19 inserts through the fan-like part 14a between the tooth 14b of the face gear 14 and the spindle 18 and protrudes from the face gear 14 oppositely relative to the input gear 13. The connection shaft 19 is fixed to the face gear 14 or relatively rotatably connected to the face gear 14. The axial direction of the connection shaft 19 is parallel to the axial direction of the spindle 18. The connector 15b (second connector) is connected to the release bearing 9 via the connection shaft 20 (second connection shaft) and the release fork 16.

As illustrated in FIG. 1, the profile of the release fork 16 (connection member) is a substantially rod. The release fork 16 is interposed between the rod 15 and the release bearing 9 outside the casing 10. The release fork 16 includes connectors 16a and 16b at both longitudinal ends thereof. The connection shaft 20 inserts through the connector 16a (third connector). The connector 16a is connected to the connector 15b of the rod 15 via the connection shaft 20. The axial direction of the connection shaft 20 is parallel to the axial direction of the spindle 18. The connector 16a and the connector 15b of the rod 15 are rotatable about the connection shaft 20. The connector 16b, on the other hand, is connected to the release bearing 9. Specifically, the connector 16b is slidably fitted into a concave connector 9a of the release bearing 9. The release fork 16 is rotatably supported by a spindle 21 at a part (intermediate part) between the connector 16a and the connector 16b. The axial direction of the spindle 21 is parallel to the axial direction of the spindle 18. The spindle 21 is supported by the case of the transmission. The release fork 16 operates as a lever with the effort at the connector 16a (connection shaft 20), the fulcrum at the spindle 21, and the load at the connector 16b (connector 9a).

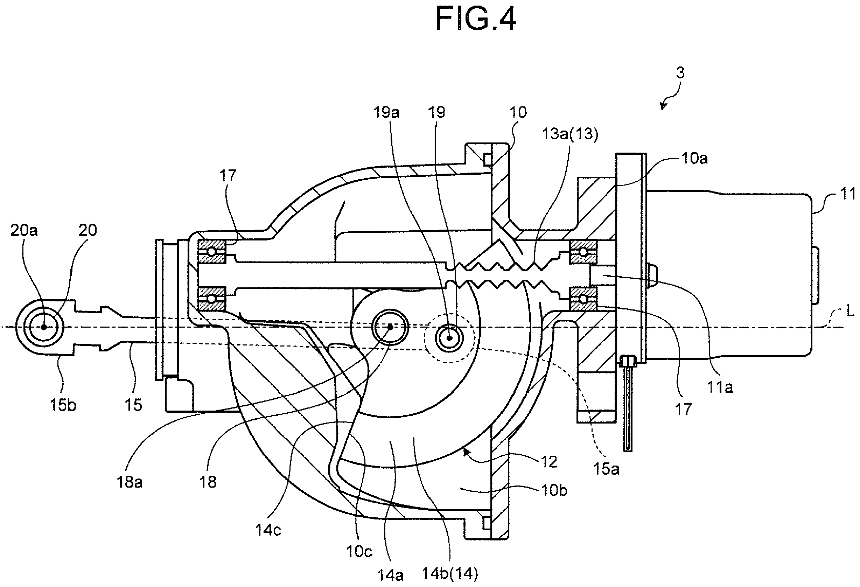

In the above-structured clutch actuator 3, the face gear 14 is rotatable (swingable) between a first position (abutment position) illustrated in FIG. 4 and a second position indicated by the chain double-dashed line in FIG. 1. The face gear 14 is rotated between the first position and the second position. The first position is defined as a position at which the face gear 14 abuts on the stopper 10c and is restricted from rotating by the stopper 10c. The second position is defined as a position distant from the stopper 10c. The rod 15 and the release fork 16 are reciprocable between a first position illustrated in FIG. 4 and a second position indicated by the chain double-dashed line in FIG. 1. A dead center position (dead center) (position indicated by the solid line in FIG. 1 and position in FIG. 2) is located between the first position and the second position. The dead center position refers to the position of the conversion mechanism 12 (face gear 14, rod 15, and release fork 16) when a shaft center 18a of the spindle 18, a shaft center 19a of the connection shaft 19, and a shaft center 20a of the connection shaft 20 are aligned on the same straight line L as viewed along the axial direction of the spindle 18. In the present embodiment, the dead center position is defined as a bottom dead center position (bottom dead center) at which the shaft center 18a of the spindle 18 comes between the shaft center 19a of the connection shaft 19 and the shaft center 20a of the connection shaft 20. In other words, in the present embodiment, when the shaft center 18a of the spindle 18, the shaft center 19a of the connection shaft 19, and the shaft center 20a of the connection shaft 20 are aligned on the same straight line L as viewed along the axial direction of the spindle 18, the conversion mechanism 12 (face gear 14, rod 15, and release fork 16) is placed at the dead center position at which the shaft center 18a of the spindle 18 comes between the shaft center 19a of the connection shaft 19 and the shaft center 20a of the connection shaft 20. In the present embodiment, the face gear 14 and the rod 15 are prevented from moving to a top dead center position (top dead center) at which the shaft center 19a of the connection shaft 19 comes between the shaft center 18a of the spindle 18 and the shaft center 20a of the connection shaft 20. At the first position the end 14c of the face gear 14 abuts on the stopper 10c, placing the clutch 2 in a completely engaged state. In the completely engaged state, the flywheel 4 and the clutch disc 6 serving as power transmission members are frictionally engaged with each other to transmit power between the flywheel 4 and the clutch disc 6. When the rod 15 and the release fork 16 are placed at the first position, the shaft center 19a of the connection shaft 19 is placed on one side of the straight line L as viewed along the axial direction of the spindle 18 (lower side in FIGS. 1 and 4). At the second position, on the other hand, the clutch 2 is placed in a disengaged state. In the disengaged state, the flywheel 4 and the clutch disc 6 are not frictionally engaged with each other, not to transmit power between the flywheel 4 and the clutch disc 6. The face gear 14 moves from the first position to the second position while rotating to be distant away from the stopper 10c. When the rod 15 and the release fork 16 are located at the second position, the end 14c of the face gear 14 is distant from the stopper 10c. Furthermore, when the rod 15 and the release fork 16 are located at the second position, the shaft center 19a of the connection shaft 19 comes on the other side of the straight line L as viewed along the axial direction of the spindle 18 (upper side in FIGS. 1 and 4). While the rod 15 is located in the range from the dead center position (FIG. 2) to the first position (FIG. 4), no slippage occurs between the flywheel 4 and the clutch disc 6 in the clutch 2, that is, their completely engaged state is maintained. In other words, the power transmission by the clutch 2 is maintained. While the rod 15 is located in the range from the dead center position (FIG. 2) to the first position (FIG. 4), the shaft center 19a of the connection shaft 19 comes on the straight line L or on the other side of the straight line L as viewed along the axial direction of the spindle 18 (lower side in FIGS. 1 and 4).

In the present embodiment, the face gear 14 and the rod 15 are positioned in the range including the dead center position during a stop of energization of the electric motor 11. The range including the dead center position is from the dead center position to the first position. In the present embodiment, during the stop of the energization of the electric motor 11, at default the face gear 14 and the rod 15 are located at the first position (position in FIG. 4). With the face gear 14 and the rod 15 located at their default positions (first position), the electric motor 11 is energized to rotate in one direction (forward rotation) and transmit power via the input gear 13 to move the face gear 14 to the second position (position indicated by the chain double-dashed line in FIG. 1). This operation of the face gear 14 is transmitted to the release fork 16 via the rod 15. The release fork 16 presses (moves) the release bearing 9 oppositely relative to the flywheel 4 (right side in FIG. 1). This releases the frictional engagement between the clutch disc 6 and the flywheel 4 and places the clutch 2 in the disengaged state. Specifically, by the energization of the electric motor 11, the face gear 14 moves to the second position to move the rod 15, causing the clutch 2 to interrupt the power transmission. By the energization of the electric motor 11 to rotate in the other direction (reverse rotation) while the clutch 2 is in the disengaged state, the face gear 14 is supplied with the power of the electric motor 11 from the input gear 13 and returns to the default position (position in FIG. 4). This operation of the face gear 14 is transmitted to the release fork 16 via the rod 15. The release fork 16 then presses (moves) the release bearing 9 toward the flywheel 4 (left side in FIG. 1). As a result, the clutch disc 6 and the flywheel 4 are frictionally engaged with each other by the pressing force of the diaphragm spring 8, placing the clutch 2 in the completely engaged state.

In the present embodiment, as described above, while the rod 15 is located in the range from the dead center position to the first position, the clutch 2 is placed in the completely engaged state. In other words, the clutch 2 maintains power transmission. Here, the rod 15 is located at the first position when the face gear 14 is located at the first position. While the rod 15 is located in the range from the dead center position to the first position, the shaft center 19a of the connection shaft 19 is located on the straight line L or on the other side of the straight line L as viewed along the axial direction of the spindle 18. In the present embodiment, the stop of the energization of the electric motor 11 places the face gear 14 and the rod 15 at their default positions (positions in FIG. 4). The state of the clutch actuator 3 at the default position may be hereinafter referred to as initial state. Then, upon receiving a load from the clutch 2 via the release fork 16 in the initial state of the clutch actuator 3, the rod 15 generates a moment to swing the face gear 14. For example, when receiving a load in the direction from the connector 15b toward the connector 15a (substantially rightward in FIG. 4), the rod 15 generates a moment to move together with the face gear 14 toward the dead center position. Thus, the rod 15 and the face gear 14 move toward the dead center position. At the dead center position, the rod 15 does not generate the moment to swing the face gear 14, and the rod 15 and the face gear 14 no longer move and stop at the dead center position, reaching the dead center position. Thereby, the movement of the release bearing 9 is restricted. Specifically, upon receiving a load from the clutch 2 while the face gear 14 is located at the first position, the rod 15 rotates the face gear 14 and stops at the dead center position. On the other hand, for example, upon receiving a load in the direction from the connector 15a toward the connector 15b (substantially leftward in FIG. 4) in the initial state of the clutch actuator 3, the rod 15 generates the moment to swing the face gear 14. The moment in this case acts on the face gear 14 to press the stopper 10c. In this case, the end 14c of the face gear 14 abuts on the stopper 10c, and hence the face gear 14 and the rod 15 are restricted from moving in the direction opposite to the direction from the first position toward the dead center position. Thus, the movement of the release bearing 9 is restricted. As described above, in the present embodiment, at the time the energization of the electric motor 11 is stopped, the rod 15 is placed at the dead center position or the first position to thereby restrict the linear motion of the release bearing 9. In the present embodiment, the dead center position and the first position correspond to a restrictive position.

As described above, in the present embodiment, the conversion mechanism 12 includes the face gear 14, the connection shafts 19 and 20, and the rod 15. The face gear 14 is rotated about the spindle 18 by the drive power of the electric motor 11. The connection shaft 19 is provided to the face gear 14 at a position different from the position of the spindle 18. The axial directions of the connection shafts 19 and 20 are parallel to the axial direction of the spindle 18. The rod 15 includes the connectors 15a and 15b. The connector 15a is connected to the face gear 14 via the connection shaft 19. The connector 15a is rotatable about the connection shaft 19. The connector 15b is connected to the release bearing 9 via the connection shaft 20. The connector 15b is rotatable about the connector shaft 20. When the energization of the electric motor 11 is stopped, the rod 15 at the restrictive position works to restrict the linear motion of the release bearing 9. The restrictive position includes the position of the rod 15 that is defined by the alignment of the shaft center 18a of the spindle 18, the shaft center 19a of the connection shaft 19, and the shaft center 20a of the connection shaft 20 on the same straight line as viewed along the axial direction of the spindle 18. According to the present embodiment, the position of the release bearing 9 can be thus held without electric power. This can accordingly improve vehicle fuel efficiency and reduce the heat generation of the controller. Furthermore, the movement of the release bearing 9 can be restricted during the stop of the energization of the electric motor 11, and hence a gear (face gear 14) with high power transmission efficiency can be employed as the gear for transmitting power of the electric motor 11, resulting in achieving downsizing of the electric motor 11 and a decrease in the gear ratio of the conversion mechanism 12, and cost reduction of the clutch actuator 3.

Furthermore, in the present embodiment, the conversion mechanism 12 includes the stopper 10c. The stopper 10c abuts against the face gear 14 to restrict the movement of the face gear 14 in the direction opposite to the direction toward the position defined by the alignment of the shaft center 18a of the spindle 18, the shaft center 19a of the connection shaft 19, and the shaft center 20a of the connection shaft 20 on the same straight line as viewed along the axial direction of the spindle 18. The restrictive position includes the position of the rod 15 while the face gear 14 abuts on the stopper 10c. According to the present embodiment, by the abutment between the stopper 10c and the face gear 14, the position of the release bearing 9 can be thus held without electric power.

Furthermore, in the present embodiment, the conversion mechanism 12 includes the input gear 13 connected to the electric motor 11, and the drive power of the electric motor 11 is transmitted to the face gear 14 via the input gear 13. Thus, according to the present embodiment, the power of the electric motor 11 can be transmitted more efficiently than the drive power transmission of the electric motor 11 via a worm gear and a worm wheel. Consequently, according to the present embodiment, the electric motor 11 can be downsized and the reduction ratio of the conversion mechanism 12 can be reduced. In the present embodiment, power transmission efficiency between the input gear 13 and the face gear 14 is higher than power transmission efficiency between the worm gear and the worm wheel. The power transmission efficiency between the worm gear and the worm wheel is about 40% to 50%. In order to transmit the power of the electric motor 11 via the worm gear and the worm wheel, a high output electric motor or an increase in the reduction ratio of the conversion mechanism is required, which will upsize the clutch actuator.

Furthermore, in the present embodiment, the energization of the electric motor 11 is stopped while the clutch 2 is put in the completely engaged state. The clutch 2 is disengaged at the time of a gear shift of the transmission. Hence, since the duration (frequency) of the completely engaged state is longer (higher) than the duration (frequency) of the disengaged state, stopping the energization of the electric motor 11 during the completely engaged state of the clutch 2 enables further improvement in vehicle fuel efficiency.

### First Modification

In the present modification, when the energization of the electric motor 11 is stopped, at default the rod 15 is located at an intermediate position (not illustrated) between the dead center position (position in FIG. 2) and the first position (abutment position, position in FIG. 4). In other words, in the initial state of the clutch actuator 3, the rod 15 is positioned at the intermediate position between the dead center position and the first position. Upon receiving a load from the clutch 2 via the release fork 16 in the initial state of the clutch actuator 3, the rod 15 generates a moment to swing the face gear 14. For example, when receiving a load in the direction from the connector 15b toward the connector 15a (substantially rightward in FIG. 4), the rod 15 generates a moment to move together with the face gear 14to the dead center position. As a result, the rod 15 and the face gear 14 move toward the dead center position. At the dead center position, the rod 15 does not generate the moment to swing the face gear 14, and hence the rod 15 and the face gear 14 no longer move and stop at the dead center position, reaching the dead center position. Thus, the position of the release bearing 9 is held. Upon receiving a load in the direction from the connector 15a toward the connector 15b in the initial state of the clutch actuator 3, the rod 15 generates the moment to swing the face gear 14. The moment in this case acts on the face gear 14 and the rod 15 to move toward the first position (position in FIG. 4). As a result, the rod 15 and the face gear 14 move toward the first position. Then, the end 14c of the face gear 14 abuts on the stopper 10c at the first position, thereby restricting the movement of the face gear 14 and the rod 15. Thus, the position of the release bearing 9 is held.

### Second Modification

In the present modification, at default the face gear 14 and the rod 15 are located at the dead center position. In other words, in the initial state of the clutch actuator 3, the rod 15 is located at the dead center position. In the initial state of the clutch actuator 3, even when receiving a load in the direction from the connector 15b toward the connector 15a or in the opposite direction, the rod 15 generates no moment. Hence, the rod 15 and the face gear 14 do not move. The position of the release bearing 9 is thus held. Note that a sensor may be provided to detect the position of the face gear 14, in order to return the face gear 14 to the default position according to a result of the detection by the sensor in a case where the face gear 14 does not stop at the default position in response to the stop of the energization.

The above embodiment and modifications have described the example where the release bearing 9 presses the inner end of the diaphragm spring toward the flywheel 4, thereby placing the clutch 2 in the completely engaged state, however, they should not be limited to such an example. For example, although not illustrated, the clutch 2 may be disengaged by pressing the inner end of the diaphragm spring 8 to the flywheel 4 by the release bearing 9. In this case, the diaphragm spring 8 is supported by a support (not illustrated) of the clutch cover 5 at the middle part between the outer end and the inner end so as to be swingable about the support of the clutch cover 5 as fulcrum, and press the pressure plate 7 at the outer end toward the flywheel 4. Alternatively, in this case, the release fork 16 may be modified by interchanging the positions of the connector 16b and the spindle 21 so that the connector 16a (connection shaft 20) serves as the effort, the connector 16b (connector 9a) serves as the fulcrum, and the spindle 21 serves as the load.

### Second Embodiment

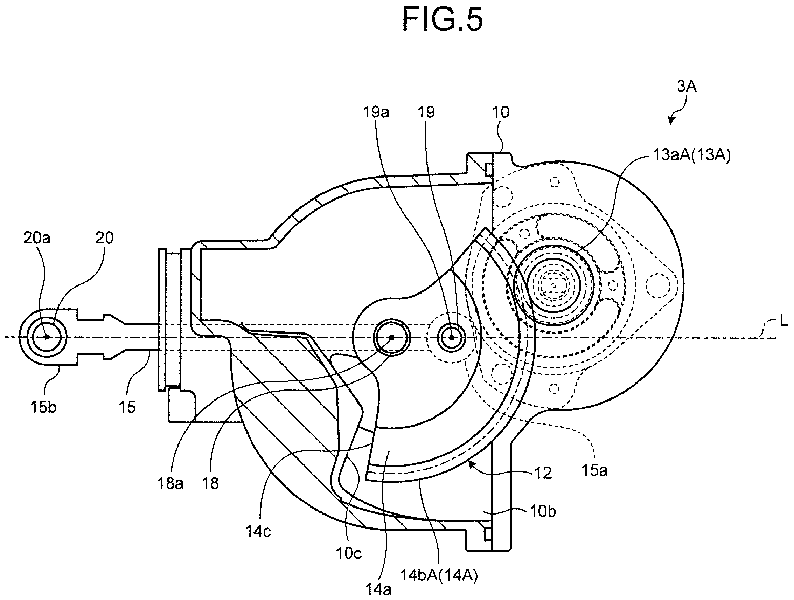

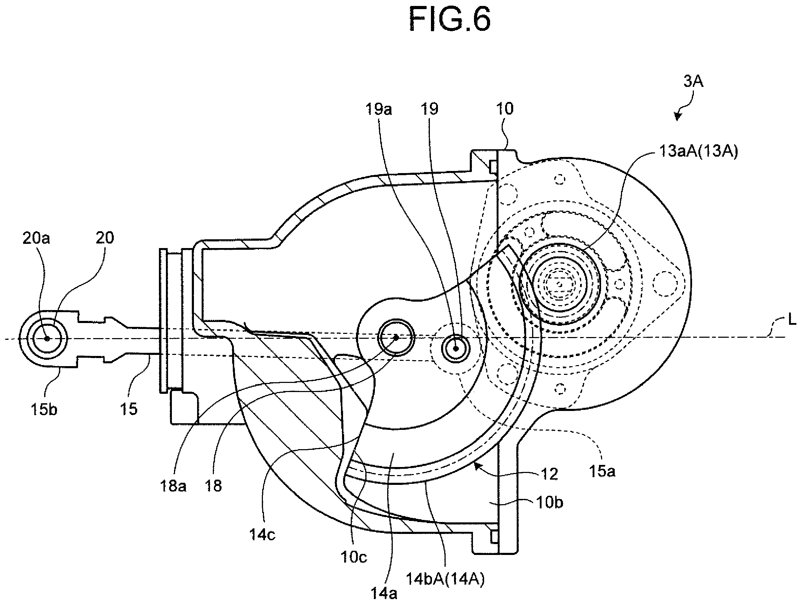

As illustrated in FIGS. 5 and 6, a clutch actuator 3A in the present embodiment differs from the first embodiment in that an input gear 13A connected to the electric motor 11 is a helical gear (first helical gear) having a disc (wheel) with a tooth 13aA on the outer circumference and that a gear to be engaged with the input gear 13A is a helical gear 14A (second helical gear) having a disc (wheel) with a tooth 14bA on the outer circumference. According to the thus-structured present embodiment, the power of the electric motor can be more efficiently transmitted than the drive power transmission of the electric motor 11 via a worm gear and a worm wheel. Thus, according to the present embodiment, the electric motor 11 can be downsized and the gear ratio of the conversion mechanism 12 can be reduced. In the present embodiment, the power transmission efficiency between the input gear 13 and the face gear 14 is higher than the power transmission efficiency between the above worm gear and worm wheel.

While the embodiments and modifications of the present invention have been exemplified, the embodiments and modifications are merely illustrative and not intended to limit the scope of the invention. The embodiments and modifications can be carried out in various other forms, and various omissions, substitutions, combinations, and changes can be made in the range not departing from the gist of the invention. The configurations, shapes, and specifications of displayed elements (such as structure, type, direction, shape, size, length, width, thickness, height, number, arrangement, position, and material) can be appropriately changed in practice. For example, the rod may restrict the movement of the movable member by being positioned in the range including the bottom dead center position while the energization of the electric motor is stopped. Furthermore, for example, the motion conversion device may be applied to an actuator configured to drive the sliding doors of a vehicle. Furthermore, the clutch actuator may drive multiple clutches.

### EXPLANATIONS OF LETTERS OR NUMERALS

- 2: clutch
- 3, 3A: clutch actuator (motion conversion device)
- 9: release bearing (movable member, release member)
- 10c: stopper
- 11: electric motor
- 12: conversion mechanism
- 13, 13A: input gear (gear)
- 14: face gear (rotating member)
- 14A: helical gear
- 15: rod
- 15a: connector (first connector)
- 15b: connection (second connector)
- 18: spindle
- 18a: shaft center
- 19: connection shaft (first connection shaft)
- 19a: shaft center
- 20: connection shaft (second connection shaft)
- 20a: shaft center
- L: straight line

## Claims

1. A motion conversion device, comprising:
an electric motor; and
a conversion mechanism that converts a rotational motion of the electric motor into a linear motion of a movable member,
the conversion mechanism comprising:
a rotating member to be rotated about a spindle by drive power of the electric motor;
a first connection shaft provided to the rotating member at a position different from a position of the spindle, an axial direction of the first connection shaft being parallel to an axial direction of the spindle;
a second connection shaft, an axial direction of the second connection shaft being parallel to the axial direction of the spindle; and
a rod,
the rod comprising:
a first connector connected to the rotating member via the first connection shaft and rotatable about the first connection shaft; and
a second connector connected to the movable member via the second connection shaft and rotatable about the second connection shaft, wherein
when energization of the electric motor is stopped, the rod is located at a restrictive position to restrict the linear motion of the movable member, and
the restrictive position includes a position of the rod defined by alignment of a shaft center of the spindle, a shaft center of the first connection shaft, and a shaft center of the second connection shaft on the same straight line as viewed along the axial direction of the spindle.

2. The motion conversion device according to claim 1, further comprising a stopper that abuts against the rotating member to restrict the rotating member from moving in a direction opposite to a direction toward a position of the rotating member, the position defined by the alignment of
the shaft centers of the spindle, the first connection shaft, and the second connection shaft on the same straight line as viewed along the axial direction of the spindle, wherein
the restrictive position includes a position of the rod while the rotating member abuts on the stopper.

3. The motion conversion device according to claim 1 or 2, wherein
the conversion mechanism comprises a gear connected to the electric motor, and
the rotating member comprises a face gear to which the drive power of the electric motor is transmitted via the gear.

4. The motion conversion device according to claim 1 or 2, wherein
the conversion mechanism comprises a gear connected to the electric motor, and
the rotating member comprises a helical gear to which the drive power of the electric motor is transmitted via the gear.

5. A clutch actuator, comprising:
an electric motor; and
a conversion mechanism that converts a rotational motion of the electric motor into a linear motion of a release member,
the conversion mechanism comprising:
a rotating member to be rotated about a spindle by drive power of the electric motor;
a first connection shaft provided to the rotating member at a position different from a position of the spindle , an axial direction of the first connection shaft being parallel to an axial direction of the spindle;
a second connection shaft, an axial direction of the second connection shaft being parallel to the axial direction of the spindle; and
a rod,
the rod comprising:
a first connector connected to the rotating member via the first connection shaft and rotatable about the first connection shaft; and
a second connector connected to the release member via the second connection shaft and rotatable about the second connection shaft, wherein
when energization of the electric motor is stopped, the rod is located at a restrictive position to restrict the linear motion of the release member, and
the restrictive position includes a position of the rod defined by alignment of a shaft center of the spindle, a shaft center of the first connection shaft, and a shaft center of the second connection shaft on the same straight line as viewed along the axial direction of the spindle.

6. The clutch actuator according to claim 5, wherein the position of the rod defined by the alignment of the shaft centers of the spindle, the first connection shaft, and the second connection shaft on the same straight line as viewed along the axial direction of the spindle includes a dead center position at which the shaft center of the spindle comes between the shaft center of the first connection shaft and the shaft center of the second connection shaft.

7. The clutch actuator according to claim 5 or 6, wherein
the rotating member is rotated between a first position and a second position distant from the stopper portion, the first position at which the rotating member abuts on a stopper and is restricted from rotating by the stopper, and
when the energization of the electric motor is stopped, the rotating member is located at the first position to maintain power transmission by a clutch including the release member.

8. The clutch actuator according to claim 7, wherein the clutch interrupts the power transmission when by the energization of the electric motor, the rotating member moves to the second position to move the rod.

9. The clutch actuator according to claim 7 or 8, wherein,
when receiving a load from the clutch while the rotating member is located at the first position, the rod rotates the rotating member and stops at the position defined by the alignment of the shaft centers of the spindle, the first connection shaft, and the second connection shaft on the same straight line as viewed along the axial direction of the spindle.

10. The clutch actuator according to any one of claims 7 to 9, wherein the clutch transmits power while the rod is located in a range from the position defined by the alignment of the shaft centers of the spindle, the first connection shaft, and the second connection shaft on the same straight line as viewed along the axial direction of the spindle to the position defined by the first position of the rotating member.
